# EUROPEAN PATENT SPECIFICATION

(11) **EP 3 410 328 B1**
(45) Date of publication and mention of the grant of the patent: **15.01.2025**
(21) Application number: 17173666.3
(22) Date of filing: 31.05.2017
(51) Int. Cl.: G06F 21/31

(54) **METHOD AND SYSTEM TO DISTINGUISH BETWEEN A HUMAN AND A ROBOT AS A USER OF A MOBILE SMART DEVICE**
VERFAHREN UND SYSTEM ZUR UNTERSCHEIDUNG ZWISCHEN EINEM MENSCHEN UND EINEM ROBOTER ALS EIN BENUTZER EINER MOBILEN INTELLIGENTEN VORRICHTUNG
PROCÉDÉ ET SYSTÈME DE DISTINCTION ENTRE UN ÊTRE HUMAIN ET UN ROBOT EN TANT QU'UTILISATEUR D'UN DISPOSITIF INTELLIGENT MOBILE

(43) Date of publication of application: 05.12.2018
(73) Proprietor: Deutsche Telekom AG, 53113 Bonn (DE)
(72) Inventor: ROSHANDEL, Mehran, 13591 Berlin (DE); MASHHADI SOHI, Soroush, 14195 Berlin (DE)
(74) Representative: Vossius & Partner Patentanwälte Rechtsanwälte mbB

(56) References cited:
- WO-A1-2010/105249
- WO-A1-2014/205148
- US-A1- 2010 115 610
- US-A1- 2016 103 996
- JONATHAN ANDERSON ET AL: "Stayin Alive: Aliveness as an Alternative to Authentication", 12 April 2012, SECURITY PROTOCOLS XX, SPRINGER BERLIN HEIDELBERG, BERLIN, HEIDELBERG, PAGE(S) 242 - 250, ISBN: 978-3-642-35693-3, XP047007918

## Description

The invention relates to the field of telecommunication. In particular the invention relates to a system and method for a Completely Automated Public Turing test to Tell Computer and Human Apart (CAPTCHA).

Today's life without Internet and online services is not imaginable. Web based services have taken an important role in the daily routine of many people. Therefore the number of websites and online services is growing daily. However, in consequence the number of Internet threats and fraud is equally growing. One particular danger in the online world are so-called robots. Robots are computer programs which try to pose themselves as humans. A well-known example of a robot is a program which creates a free email account for commercial or malicious activities such as SPAM-email. Such a robot may create hundreds or thousands of email accounts within a very short time, e.g. one hour.

While the misuse of a fake email account may be annoying to the email service provider and the recipient of the SPAM-email, this robot activity is one of the smaller threats. Robots may also disturb online polling processes, or block online shops, or perform so-called denial of service attacks on government or military servers.

CAPTCHAs have been developed to tell humans and robots apart. CAPTCHA technology provides a computer program that protects against robots by generating and grading tests that humans can pass but current computer programs cannot, see literature 4. One example for a CAPTCHA task is a distorted text that humans are able to read; however, computers are currently unable to decipher.

The following CAPTCHAs are known to the skilled person: text based CAPTCHA, graphic based CAPTCHA, audio based CAPTCHA, game based CAPTCHA, video based CAPTCHA, advertise based CAPTCHA. Reference is made to literature 1 to 5 providing for the examples of CAPTCHA tests.

Millions of CAPTCHAs are solved by people every day. reCAPTCHA makes positive use of this human effort by channeling the time spent solving CAPTCHAs into digitizing text, annotating images, and building machine learning datasets. This in turn helps to preserve books, to improve maps, and to solve hard AI problems, see literature 6 to 8.

In other words, current CAPTCHA programs present a task, which cannot be solved by a robot. However, virtually any task can be solved by a computer. Therefore, it is necessary that finding the solution is economically not interesting for the robot operator, from a perspective of computational effort.

EP 2 458 524 A1 relates to a method for identifying a user of a mobile device having an acceleration sensing unit, comprises: predefining a pattern of a movement of the mobile device wherein pattern signals comprising pattern acceleration signals sensed by the acceleration sensing unit are recorded during regular physical activities of the user of the mobile device together with the mobile device; obtaining data based on ongoing signals comprising ongoing acceleration signals sensed by the acceleration sensing unit; comparing the obtained data with the predefined pattern; and initiating a security function if the obtained data does not correspond to the predefined pattern. The method allows for increasing security of data and of service access on mobile devices based on analysis of movement data captured by the mobile device. The method allows for on-line, implicit and continues protection of data and service access without burden of involving active attention of the user. On one hand, analysis physical movement data captured by the mobile device can indicate unexpected events which can lead to having the phone being lost, stolen or the like. On the other hand, analysis of physical movement data during the user's regular physical activities such as walking or the like can additionally allow for authenticating/identifying the user. The method can be an implicit authentication technique, i.e. it does not involve active attention of the user, and it is performed continuously as the user is regularly using or carrying the mobile device. Physical movement data is captured by the acceleration sensing unit such as accelerometer sensors commonly embedded in modem mobile devices, see also literature 9.

US 2016/103996 A1 relates to a computing device processor configured with processor-executable instructions to implement methods of using behavioral analysis and machine learning techniques to identify, prevent, correct, or otherwise respond to malicious or performance-degrading behaviors of the computing device.

However, while it appears reasonable to extensively collect user data in a device to provide security services on said device, the method is not suitable for a CAPTCHA since the recorded data is a security risk, especially if transmitted to a third party for passing a CAPTCHA test.

US 2016/103996 A1 relates to methods of using behavioral analysis and machine learning techniques to identify, prevent, correct, or otherwise respond to malicious or performance-degrading behaviors of the computing device.

US 2010/115610 A1 relates to a method and a system for evaluating identification of a user based on behavioral patterns and time patterns, including an analysis component for analyzing data; an authentication component for authenticating the analyzed data; and a behavioral biometric device for collecting behavioral biometric data related to the user.

WO 2014/205148 A1 relates to a system and a method for establishing user identities through continuously monitoring input device usage.

WO 2010/105249 A1 relates to a system and method for distinguishing human input events from malware- generated events based on obtaining a first set of input events from a user utilizing the input device. The first input events are used to obtain or derive a feature indicative of the user, such as a multi-dimensional feature vector as provided by a support vector machine. Second input events are then obtained, and the second input events are classified against the feature to determine if either the user or malware initiated the second input events.

Anderson et al. "Stayin' Alive: Aliveness as an Alternative to Authentication", XP 47007918; relates to extensions to the Kerberos authentication which allow systems to test whether or not they are interacting with a real person, optionally disregarding their identity.

Therefore it is an object of the present invention to provide an improved CAPTCHA test, which may not be dissolved by current and/or future computer technology and does not present a security risk.

This object is achieved by the features of the subject-matter of the independent claims. The dependent claims relate to further aspects of the invention. Any references in the following description to embodiments, objects, aspects and/or examples which are not covered by the appended claims are considered as not being part of the present invention.

The invention focuses on a CAPTCHA based on an analysis of a user behavior rather than presenting a test. The inventive concept is to record user behavior data and building a behavioral vector relating to the use data, which enables application behavior request processor unit to distinguish between a robot and a human. The use data may comprise sensor data, such as accelerometer data or, Gyro data, GPS data, and/or magnetometer data. The use data may also comprise application related data such as frequently opened applications, frequently used grammar in text messages or email, and/or any pattern of use from a browser or other computer program. A use pattern may comprise the number of interactions per predetermined time, the number of input, and/or other data relating to the use behavior of a computer program. Furthermore, the behavioral data may also comprise information about the outgoing or incoming connections, in particular the data connections of the mobile device.

Based on the statistics of the above behavioral data, a characteristic user behavioral vector is generated. By evaluating said vector the CAPTCHA-system can distinguish between a human and a robot. The CAPTCHA-system may also be able to detect whether the mobile device is operated by the owner or it is used by some other user and may be stolen. At the same time the vector merely contains statistical data on the user behavior and does not allow reconstructing any specific and/or critical user related data.

While some use data such as the data used in EP 2 458 524 A1 is sufficient to identify a specific user, other data is not specific enough to distinguish between different users. The invention, however, builds on the fact that this data may still be used to distinguish between a human and a robot.

### Brief description of the drawings

In the Figures:
Figure 1 shows one embodiment of the invention and
Figure 2 shows data patterns of use data according to the invention.

### Detailed description of the Invention

Mobile devices in general and smart phones and tablets in particular are equipped with many different sensors and advanced operation systems, e.g. Android, iOS and Windows. According to the invention many types of use data is recorded in order to build up a history based on user's behavior.

Already most of applications such as sport, running, cycling, health and climbing applications record the history of use data, e.g. a number of taken steps, to suggest a personal exercise plan. But also other applications already record the use data. In other words, every user has a history of his behavior on his mobile device. This data is already collected and saved on the mobile devices. The invention utilizes that information to distinguish between a human and a robot.

The CAPTCHA-system according to the invention is based on pattern recognition in the use data. A data analyzer unit searches for any patterns in the use data that relates to a user dependent behavior. The data analyzer unit extracts features from the use data to recognize characteristic patterns and merges the patterns to build up a user behavioral vector. This vector allows for distinguishing between human and robot and for preventing the access of a robot to a service. It may also prevent unauthorized users from access.

In one embodiment pattern recognition is performed on data relating to body movements of the user. Recorded data from an accelerometer and a GPS could be used, since the data itself comprises characteristic patterns, if the device is being used by a human and not merely operated by a software or a robot.

In case that the history of the mobile device is hacked, the system may compare the most recent data from a predetermined time period, e. g. last behavior of the past 15 minutes, with at least one other period from the history. Known methods of anomaly detection may be used to recognize any unusual activity the recent data to identify, whether or not the device is hacked by a robot or malware.

In one embodiment a pattern recognition is performed on data relating to the application use data. Every user has a specific behavior in terms of a number of times and a type of applications the user opens on the device as well as the time the user spends using a specific application per day or in specific period of time. This data is recorded by the data collector unit according to the invention. The data analyzer unit analyses this data with a pattern recognition algorithm to find the normal user behavior.

In one embodiment the use data of a navigation app may be used. The data regarding touch inputs, GPS tracking, and/or typical navigation destinations may be used to distinguish between a human and a robot.

In one embodiment the use data of a social-network app may be used. The data regarding frequently visited profiles and/or number, content and frequency of posts may be used to distinguish between a human and a robot.

To distinguish between a human and a robot the behavior request processor according to the invention receives the most recent data from a predetermined period, e.g. of the last 15 minutes, from a database in the device and compares it with the normal user's behavior patterns to find out whether there is an anomaly or not.

In one embodiment pattern recognition is performed on data relating to written SMS and messages. The data analyzer unit searches for a pattern among the written messages. The algorithm in the system finds the grammar rules and/or vocabulary domain which are frequently employed by a user in order to write a message and builds up a pattern upon this data.

Suitable and preferred algorithms for the statistical analysis of the use data of step a) are based on a Decision Tree, fast Fourier transform, a neural network, support vector machines, and/or a multi-layer perceptron

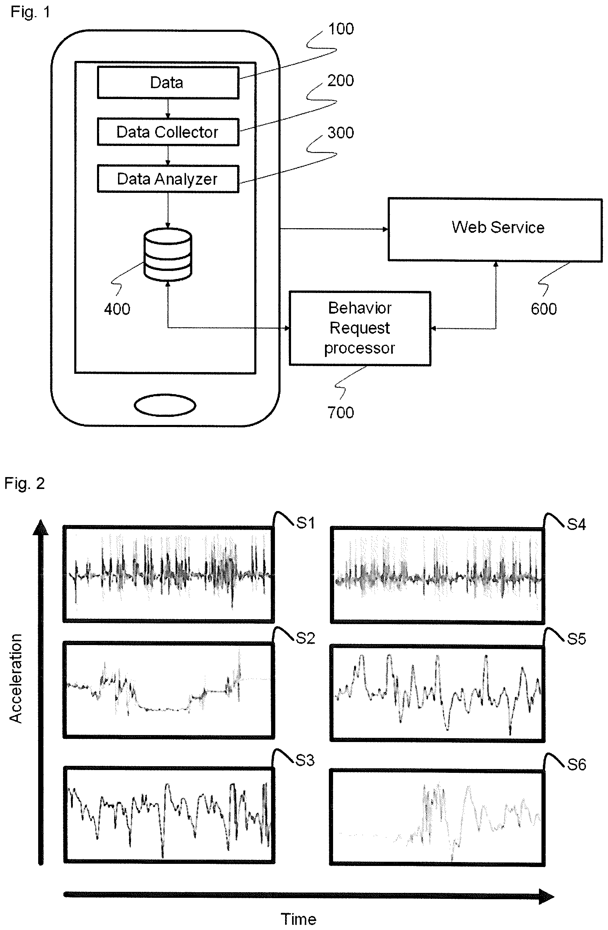

Figure 1 shows one embodiment of the invention. On a mobile device data 100 is, preferably continuously, recorded by a plurality of sensors. The data is collected by a data collection unit 200 of the system. The data is then analyzed in a data analyzer unit 300. The data analyzer unit 300 searches for patterns in the collected data. Pattern recognition algorithms may be used by the data analyzer unit 300. Characteristic patterns are identified and merged to build a user behavioral vector.

The analyzed data, i.e. the behavioral vector, is then saved in a database 400. In case the device 500 requests an information from a third party, in particular a web service 600, the web service may request information whether or not the user of the device 500 is a human or a robot, i.e. requesting a CAPTCHA. Therefore the web service 600 contacts the behavior request processor 700 of the system to receive a CAPTCHA response message.

The behavior request processor 700 retrieves the behavioral vector from the database. The behavior vector from a predetermined time may be requested. The predetermined time is preferably between 1 to 5 minutes. Based on a comparison with either a model and/or with at least one further behavioral vector from the database 400, the behavior request processor 700 distinguishes between a human or a robot and sends the corresponding CAPTCHA response message to the web service 600.

In one embodiment of the invention the behavior request processor 700 may be formed in the device. Preferably, the behavior request processor may be formed in a protected portion of the operating a system.

In one embodiment of the invention the behavior request processor 700 may be formed in a cloud service. Since the data stored in the database 400 does not allow for identification of a specific human being, i.e. a user, the data is not security sensitive and may even be transmitted by or unsecured connections. However, it is preferred to transmit data is in the system by or secure connections.

Fig. 2 shows data patterns of use data according to the invention. The shown patterns S1 to S6 correspond to accelerometer readings over a certain time for 6 different activities. Even without the use a sophisticated algorithm a profile difference between different activities is obvious.

However, according to the invention within each sample time frame S1 to S6 the data analyzer unit searches for characteristic patterns which are typical for use by a human, regardless of the actual profile of a specific activity.

The data in S1 relates to running; the data in S2 relates to resting during typing for 1 minute; the data in S3 relates to holding a mobile phone in a hand while looking at the display; the data in S4 relates to walking; the data in S5 relates to typing on a keyboard; and S6 relates to calling with a mobile phone holding it near to an ear.

The system searches for a pattern in each one of the above signals. For instance, the signal relating to running S1 has more peaks than the signal of typing on the keyboard S5. Amplitude and the time between the peaks in S1 are the factors to understand the speed and the amount of pressure on the feet when the user is running. These together indicates that the user runs and also teaches specifics about the way of the user's running.

The system analyzes the above signals for a period of time and deducts that the user is typing, running, relaxing or sitting and based on the recognized patterns determines whether or not the way of, e.g., running is the running style of a human user. Through this process, a human user would be approved and a fake and/or other user would be reject.

The invention provides at least the following advantages:
First, the CAPTCHA-system according to the invention provides a high security. CAPTCHAs like image recognition, game or puzzle or moving image CAPTCHAs can eventually be hacked by current advanced artificial intelligence algorithms.

Second, the CAPTCHA-system according to the invention is fast and user friendly than other methods, because the CAPTCHA doesn't present a user with a task to solve. In other words, there is no effort required from the users to pass the CAPTCHA. Instead the CAPTCHA uses the saved history of use data, looks for an anomaly, takes the most recent data and decides whether or not to send approval message in case of normal activity or a reject message in case of a hacked device or a robot.

Third, the CAPTCHA allows for a plausibility check of last recent user behavior with their own history is the best method to recognize whether the phone is hacked by software or a robot.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### References:

| | |
|---|---|
| literature 1 | DE 20 2013 100 910 U1 |
| literature 2 | US 7 929 805 |
| literature 3 | US 8 483 518 |
| literature 4 | "Survey of Different Types of CAPTCHA," Ved Prakash Singh et al, (IJCSIT) International Journal of Computer Science and Information Technologies, Vol. 5 (2), 2014, 2242-2245 |
| literature 5 | US 2013/0091027 A1 |
| literature 6 | "reCAPTCHA: Human-Based Character Recognition via Web Security Measures",Luis von Ahn et al., Science 12 Sep 2008, Vol. 321, Issue 5895, pp. 1465-1468; DOI: 10.1126/science. 1160379 |
| literature 7 | website: https://www.google.com/recaptcha/intro/index.html (retrieved: March 28, 2017) |
| literature 8 | US 2012/0023549 |
| literature 9 | Hamed Ketabdar, Mehran Roshandel, Daria Skripko "Towards Implicit Enhancement of Security and User Authentication in Mobile Devices Based on Movement and Audio Analysis," Hamed Ketabdar et al., ACHI 2011 : The Fourth International Conference on Advances in Computer-Human Interactions |

## Claims

1. Method to distinguish between a human and a robot as a user of a mobile smart device, comprising the following steps:
a) continuously collecting and temporarily storing use data from at least one sensor of the mobile smart device and/or at least one application running on the mobile smart device;
b) building a current user behavior vector based on a statistical analysis of the use data in a predetermined time frame, and storing the current user behavior vector in a database (400) on the mobile smart device; and
c) receiving, at a behavior request processor unit (700) formed in a cloud service, a CAPTCHA request, from a web service (600) in response to an information request from the mobile smart device;
d) at the behavior request processor (700), retrieving the current user behavior vector from the database (400);
e) at the behavior request processor (700), distinguishing a human and a robot as a user by comparing the current user behavior vector with at least one model and/or with at least one further user behavior vector from the database (400); and
at the behavior request processor (700), sending a CAPTCHA response from the behavior request processor (700) to the web service (600) based on the results of the comparing step.

2. Method of claim 1, wherein the at least one further user behavior vector being collected and stored in said database (400) during a previous predetermined time frame.

3. Method of claim 1 or claim 2, wherein the at least one sensor is a motion sensor, and the use data comprises data obtained from said motion sensor, and the user behavior vector is built based on at least of the following data: a movement duration, a movement type, a movement pattern, and a movement intensity.

4. Method of any one of claims 1 to 3, wherein the use data comprises data from an application running on the mobile smart device, and the user behavior vector is built based on at least of the following application information: number of application launches, number of inputs to the application, types of input to the application, content of input to the application, and length of use of an application.

5. Method of any one of claims 1 to 4, wherein the use data comprises data from a telecommunication unit of the mobile smart device and the user behavior vector is built based on at least of the following: number of calls made, duration of calls, numbers of text messages, length of text messages, content of text messages, amount of data sent, packet-size of data sent, last used contacts and source and destination of data sent.

6. Method of any one of claims 1 to 5, wherein the use data comprises data from a microphone of the mobile smart device and the user behavior vector is built based on at least of the following data: a frequency spectrum of the data, an intensity spectrum of the data, and at least one pattern found in the data.

7. A system to distinguish between a human and a robot as a user of a mobile smart device, the system comprising,
a data collector unit configured to continuously collect and temporarily store use data from at least one sensor of the mobile smart device and/or at least one application running on the mobile smart device;
a data analyzer unit configured to build a current user behavior vector based on a statistical analysis of the use data collected by the data collector unit in a predetermined time frame, and storing the current user behavior vector in a database (400) on the mobile smart device; and
a behavior request processor unit 700 formed in a cloud service configured to receive a CAPTCHA request from a web service 600 in response to an information request from the mobile smart device
wherein the behavior request processor unit 700 is configured to retrieve the current user behavior vector from the database (400); and
wherein the behavior request processor unit 700 is configured to distinguish a human and a robot as a user by comparing the current user behavior vector with at least one model and/or with at least one further user behavior vector from the database (400); and
wherein the behavior request processor unit 700 is configured to send a CAPTCHA response to the web service (600) based on the results of the comparing step.

8. System of claim 7, wherein the at least one further user behavior vector is collected and stored in said database (400) during a previous predetermined time frame.

## Patentansprüche

1. Verfahren zum Unterscheiden zwischen einem Menschen und einem Roboter als Nutzer eines mobilen Smart Devices, das die folgenden Schritte umfasst:
a) kontinuierliches Sammeln und Zwischenspeichern von Nutzungsdaten von zumindest einem Sensor des mobilen Smart Device und/oder zumindest einer auf dem mobilen Smart Device laufenden Anwendung;
b) Erstellen eines aktuellen Nutzerverhaltensvektors basierend auf einer statistischen Analyse der Nutzungsdaten in einem vorherbestimmten Zeitrahmen und Speichern des aktuellen Nutzerverhaltensvektors in einer Datenbank (400) auf dem mobilen Smart Device; und
c) Empfangen, an einer Verhaltensanforderungsprozessoreinheit (700), die in einem Cloud-Dienst ausgebildet ist, einer CAPTCHA-Anforderung von einem Web-Dienst (600) als Antwort auf eine Informationsanforderung von dem mobilen Smart Device;
d) an dem Verhaltensanforderungsprozessor (700), Abrufen des aktuellen Nutzerverhaltensvektors aus der Datenbank (400);
e) an dem Verhaltensanforderungsprozessor (700), Unterscheiden eines Menschen und eines Roboters als Nutzer durch Vergleichen des aktuellen Nutzerverhaltensvektors mit zumindest einem Modell und/oder mit zumindest einem weiteren Nutzerverhaltensvektor aus der Datenbank (400); und
an dem Verhaltensanforderungsprozessor (700), Senden einer CAPTCHA-Antwort von dem Verhaltensanforderungsprozessor (700) an den Web-Dienst (600) basierend auf den Resultaten des Vergleichsschritts.

2. Verfahren nach Anspruch 1, wobei der zumindest eine weitere Nutzerverhaltensvektor während eines früheren vorherbestimmten Zeitrahmens gesammelt und in der genannten Datenbank (400) gespeichert wird.

3. Verfahren nach Anspruch 1 oder Anspruch 2, wobei der zumindest eine Sensor ein Bewegungssensor ist und die Nutzungsdaten Daten umfassen, die von dem genannten Bewegungssensor erhalten werden, und der Nutzerverhaltensvektor basierend auf zumindest einer der folgenden Daten erstellt wird: einer Bewegungsdauer, einem Bewegungstyp einem Bewegungsmuster und einer Bewegungsintensität.

4. Verfahren nach einem der Ansprüche 1 bis 3, wobei die Nutzungsdaten Daten von einer auf dem mobilen Smart Device laufenden Anwendung umfassen und der Nutzerverhaltensvektor zumindest basierend auf den folgenden Anwendungsinformationen erstellt wird: Anzahl an Anwendungsstarts, Anzahl an Eingaben in die Anwendung, Typen der Eingabe in die Anwendung, Inhalt der Eingabe in die Anwendung und Länge der Nutzung einer Anwendung.

5. Verfahren nach einem der Ansprüche 1 bis 4, wobei die Nutzungsdaten Daten von einer Telekommunikationseinheit des mobilen Smart Devices umfassen und der Nutzerverhaltensvektor zumindest basierend auf einem von Folgendem erstellt wird: Anzahl an getätigten Anrufen, Dauer der Anrufe, Anzahl an Textnachrichten, Länge der Textnachrichten, Inhalt der Textnachrichten, Menge der gesendeten Daten, Paketgröße der gesendeten Daten, letzten benutzten Kontakten und Quelle und Ziel der gesendeten Daten.

6. Verfahren nach einem der Ansprüche 1 bis 5, wobei die Nutzungsdaten Daten von einem Mikrofon des mobilen Smart Devices umfassen und der Nutzerverhaltensvektor zumindest basierend auf den folgenden Daten erstellt wird: einem Frequenzspektrum der Daten, einem Intensitätsspektrum der Daten und zumindest einem in den Daten gefundenen Muster.

7. System zum Unterscheiden zwischen einem Menschen und einem Roboter als Nutzer eines mobilen Smart Devices, wobei das System aufweist:
eine Datensammlereinheit, die dazu konfiguriert ist, Nutzungsdaten von zumindest einem Sensor des mobilen Smart Device und/oder zumindest einer auf der mobilen intelligenten Vorrichtung laufenden Anwendung kontinuierlich zu sammeln und zwischenzuspeichern;
eine Datenanalysatoreinheit, die dazu konfiguriert ist, einen aktuellen Nutzerverhaltensvektor basierend auf einer statistischen Analyse der Nutzungsdaten, die von der Datensammlereinheit gesammelt werden, in einem vorherbestimmten Zeitrahmen zu erstellen und den aktuellen Nutzerverhaltensvektor in einer Datenbank (400) auf dem mobilen Smart Device zu speichern; und
eine Verhaltensanforderungsprozessoreinheit (700), die in einem Cloud-Dienst ausgebildet ist und dazu konfiguriert ist, eine CAPTCHA-Anforderung von einem Web-Dienst (600) als Antwort auf eine Informationsanforderung von dem mobilen Smart Device zu empfangen;
wobei der Verhaltensanforderungsprozessor (700) konfiguriert ist, den aktuellen Nutzerverhaltensvektor aus der Datenbank (400) abzurufen; und
wobei die Verhaltensanforderungsprozessoreinheit (700) dazu konfiguriert ist, einen Menschen und einen Roboter als Nutzer durch Vergleichen des aktuellen Nutzerverhaltensvektors mit zumindest einem Modell und/oder mit zumindest einem weiteren Nutzerverhaltensvektor aus der Datenbank (400) zu unterscheiden; und
wobei die Verhaltensanforderungsprozessoreinheit (700) dazu konfiguriert ist, eine CAPTCHA-Antwort an den Web-Dienst (600) basierend auf den Resultaten des Vergleichsschritts zu senden.

8. System nach Anspruch 7, wobei der zumindest eine weitere Nutzerverhaltensvektor während eines früheren vorherbestimmten Zeitrahmens gesammelt und in der genannten Datenbank (400) gespeichert wird.

## Revendications

1. Procédé de distinction entre un humain et un robot en tant qu'un utilisateur d'un dispositif intelligent mobile, comprenant les étapes suivantes :
a) la collecte continue et le stockage temporaire des données d'utilisation provenant d'au moins un capteur du dispositif intelligent mobile et/ou d'au moins une application en cours d'exécution sur le dispositif intelligent mobile ;
b) l'élaboration d'un vecteur de comportement d'utilisateur actuel sur la base d'une analyse statistique des données d'utilisation dans une trame de temps prédéterminée, et le stockage du vecteur de comportement d'utilisateur actuel dans une base de données (400) sur le dispositif intelligent mobile ; et
c) la réception, sur une unité formant processeur de demande de comportement (700) formée dans un service en nuage, d'une demande CAPTCHA provenant d'un service Web (600) en réponse à une demande d'informations provenant du dispositif intelligent mobile ;
d) sur le processeur de demande de comportement (700), l'extraction du vecteur de comportement d'utilisateur actuel de la base de données (400) ;
e) sur le processeur de demande de comportement (700), la distinction d'un humain et d'un robot en tant qu'un utilisateur en comparant le vecteur de comportement d'utilisateur actuel à au moins un modèle et/ou à au moins un autre vecteur de comportement d'utilisateur provenant de la base de données (400) ; et
sur le processeur de demande de comportement (700), l'envoi d'une réponse CAPTCHA depuis le processeur de demande de comportement (700) au service Web (600) sur la base des résultats de l'étape de comparaison.

2. Procédé selon la revendication 1, dans lequel au moins un autre vecteur de comportement d'utilisateur est collecté et stocké dans ladite base de données (400) pendant une trame de temps prédéterminée antérieure.

3. Procédé selon la revendication 1 ou la revendication 2, dans lequel l'au moins un capteur est un capteur de mouvement, et les données d'utilisation comprennent des données obtenues à partir dudit capteur de mouvement, et le vecteur de comportement d'utilisateur est élaboré sur la base d'au moins une des données suivantes : une durée de mouvement, un type de mouvement, un schéma de mouvement, et une intensité de mouvement.

4. Procédé selon l'une quelconque des revendications 1 à 3, dans lequel les données d'utilisation comprennent des données provenant d'une application en cours d'exécution sur le dispositif intelligent mobile, et le vecteur de comportement d'utilisateur est élaboré sur la base d'au moins une des informations d'application suivantes : nombre de lancements d'application, nombre d'entrées dans l'application, types d'entrée dans l'application, contenu d'entrée dans l'application, et durée d'utilisation d'une application.

5. Procédé selon l'une quelconque des revendications 1 à 4, dans lequel les données d'utilisation comprennent des données provenant d'une unité de télécommunication du dispositif intelligent mobile et le vecteur de comportement d'utilisateur est élaboré sur la base d'au moins un des éléments suivants : nombre d'appels effectués, durée d'appels, nombres de messages textuels, longueur de messages textuels, contenu de messages textuels, quantité de données envoyées, taille de paquet de données envoyées, contacts utilisés en dernier et source et destination de données envoyées.

6. Procédé selon l'une quelconque des revendications 1 à 5, dans lequel les données d'utilisation comprennent des données provenant d'un microphone du dispositif intelligent mobile et le vecteur de comportement d'utilisateur est élaboré sur la base d'au moins une des données suivantes : un spectre de fréquence des données, un spectre d'intensité des données, et au moins un schéma trouvé dans les données.

7. Système pour distinguer entre un humain et un robot en tant qu'un utilisateur d'un dispositif intelligent mobile, le système comprenant :
une unité de collecte de données configurée pour collecter en continu et stocker temporairement des données d'utilisation provenant d'au moins un capteur du dispositif intelligent mobile et/ou d'au moins une application en cours d'exécution sur le dispositif intelligent mobile ;
une unité d'analyse de données configurée pour élaborer un vecteur de comportement d'utilisateur actuel sur la base d'une analyse statistique des données d'utilisation collectées par l'unité de collecte de données dans une trame de temps prédéterminée, et stockant le vecteur de comportement d'utilisateur actuel dans une base de données (400) du dispositif intelligent mobile ; et
une unité formant processeur de demande de comportement (700) formée dans un service en nuage, configurée pour recevoir une demande CAPTCHA d'un service Web (600) en réponse à une demande d'informations provenant du dispositif intelligent mobile
dans lequel l'unité formant processeur de demande de comportement (700) est configurée pour extraire le vecteur de comportement d'utilisateur actuel de la base de données (400) ; et
dans lequel l'unité formant processeur de demande de comportement (700) est configurée pour distinguer un humain et un robot en tant qu'un utilisateur en comparant le vecteur de comportement d'utilisateur actuel à au moins un modèle et/ou à au moins un autre vecteur de comportement d'utilisateur provenant de la base de données (400) ; et
dans lequel l'unité formant processeur de demande de comportement (700) est configurée pour envoyer une réponse CAPTCHA au service Web (600) sur la base des résultats de l'étape de comparaison.

8. Système selon la revendication 7, dans lequel l'au moins un autre vecteur de comportement d'utilisateur est collecté et est stocké dans ladite base de données (400) pendant une trame de temps prédéterminée antérieure.
